# EUROPÄISCHE PATENTSCHRIFT

(11) **EP 0 734 609 B1**
(45) Veröffentlichungstag und Bekanntmachung des Hinweises auf die Patenterteilung: **07.01.1998**
(21) Anmeldenummer: 95932780.0
(22) Anmeldetag: 21.09.1995
(51) Int. Cl.: H02K 7/14, H02K 5/14, H02K 7/08, F04B 17/03, B60T 8/36, B60T 8/40

(54) **ELEKTROMOTOR, PUMPE SOWIE EIN ELEKTROMOTOR/PUMPENAGGREGAT**
ELECTRIC MOTOR, PUMP AND AN ELECTRIC MOTOR/PUMP UNIT
MOTEUR ELECTRIQUE, POMPE ET GROUPE MOTEUR ELECTRIQUE/POMPE

(30) Priorität: 23.09.1994 DE 4433972
(43) Veröffentlichungstag der Anmeldung: 02.10.1996
(73) Patentinhaber: ITT Automotive Europe GmbH, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9503715
(87) Internationale Veröffentlichungsnummer: WO9609682

(56) Entgegenhaltungen:
- DE-A- 4 224 980
- DE-A- 4 234 013
- DE-A- 4 235 962
- DE-U-29 503 978
- FR-A- 2 458 167
- US-A- 2 082 713
- US-A- 5 325 736

## Beschreibung

Die Erfindung bezieht sich auf einen Elektromotor, eine Pumpe sowie ein Motorpumpenaggregat.

Der Elektromotor besteht aus einem topfförmigen Gehäuse, einer Welle, die zentrisch im Gehäuse angeordnet ist, einem Schild, der das offene Ende des Gehäuses verschließt und einen Durchlaß aufweist, durch den die Welle aus dem Gehäuse herausgeführt ist, sowie einem am Außenrand des Schildes umlaufenden Kragen, auf den das Gehäuse aufgeschoben ist.

Ein derartiger Elektromotor ist in der DE-OS 42 35 962 beschrieben. Er dient insbesondere zum Antrieb einer axial angeflanschten Hydraulikpumpe. Die Hydraulikpumpe ist in einem Gehäuse angeordnet, das eine flache Flanschseite aufweist. Entsprechend ist die Außenseite des Schildes flächig ausgebildet, so daß beim Zusammenbau von Elektromotor und Pumpe das Pumpengehäuse und der Schild flächig aneinander liegen. Dabei wird das topfförmige Gehäuse, bis zur Flanschfläche des Pumpengehäuses geführt. Das Elektromotorgehäuse besteht aus magnetisch leitendem Material, das für den magnetischen Rückschluß der Feldlinien der im Motor vorhandenen Permanentmagnete dient.

Die Erfindung beruht auf der Aufgabe, das Motorgehäuse, das aus magnetisch leitendem Material besteht, gegenüber der Rotorlänge möglichst kurz zu bauen. Daher wird vorgeschlagen, daß der Schild aus einer flachen Grundscheibe besteht, in deren Zentrum sich der Durchlaß für die Welle befindet, sowie aus einem Randbereich, der sich schräg nach außen aus der Grundscheibe heraus erhebt und an dessen Außenrand ein umlaufender Kragen ausgebildet ist, wobei, wenn der Schild mit dem Motorgehäuse verbunden ist, die Grundscheibe in Achsrichtung betrachtet vor dem Rand des topfförmigen Gehäuses liegt.

Aus der DE-OS-42 35962 ist weiterhin bekannt, daß die Bürsten, die den Kommuntator des Elektromotors kontaktieren, auf der Innenseite des Schildes angeordnet sind. Die Weiterführung des Erfindungsgedankens nach Anspruch 1 wird vorgeschlagen, daß der Durchmesser der Grundscheibe etwas größer ist, als der Bereich, den die Bürsten in radialer Richtung ausfüllen. Die Bürsten können somit auf der Grundscheibe angeordnet werden. An der Außenseite der Grundscheibe ist eine Halterung vorgesehen, die vorzugsweise aus einem umlaufenden Steg besteht, der von der Außenfläche der Grundscheibe in axialer Richtung hervorsteht, wobei der Steg einen Innendurchmesser einschließt, der dem Außendurchmesser des Hauptlagers entspricht. In einer anderen Ausführungsform des Elektromotors kann der Schild ebenfalls mit einem umlaufenden Steg versehen werden, dessen Außendurchmesser einer Bohrung entspricht, die den Durchmesser einer Aufnahmebohrung im Pumpengehäuse entspricht.

Beide genannten Maßnahmen ermöglichen es, den Schild und damit das Motorgehäuse auf der Flanschfläche des Pumpengehäuses in radialer Richtung zu fixieren.

Der vorbeschriebene Elektromotor ist insbesondere vorgesehen für ein Pumpengehäuse, das in der W094/08830 beschrieben ist. Dieses Pumpengehäuse besteht aus einem im wesentlichen quaderförmigen Block, der eine in einer Flanschfläche einmündende Sackbohrung aufweist, in der die Welle eines Elektromotors einsteckbar ist. In einer mittleren Ebene senkrecht zur Aufnahmebohrung befinden sich Bohrungen für Pumpenkolben, wobei in Ebenen ober- und unterhalb der mittleren Ebene Gehäusekanäle verlaufen, die zu in diesen Ebenen angeordneten Ventilen, Anschlüssen bzw. Speichern hinführen.

Die Höhe des Blocks, das heißt seine Ausdehnung in axialer Richtung bezogen auf die Aufnahmebohrung wird bestimmt durch den Durchmesser der Bohrung für die Pumpenkolben, sowie den Bauraum für die Anschlüsse, die Speicher und Ventile. Es besteht nun die Aufgabe, die Bauhöhe des Blocks möglichst klein und vor allem die Bauhöhe des Aggregats bestehend aus dem Block und dem angeflanschtem Elektromotor so gering wie möglich zu halten. Daher wird vorgeschlagen, daß die Flanschseite mit einer flachen Vertiefung versehen wird, die konzentrisch zur Aufnahmebohrung ausgebildet ist, wobei der Durchmesser der Bodenfläche der Vertiefung kleiner ist als der Durchmesser des Gehäuses des anzuflanschenden Elektromotors.

Diese Vertiefung bewirkt einerseits, daß der Materialverbrauch für den Pumpenblock geringer wird, andererseits können zumindest Teilbereiche des Elektromotors in die quaderförmige Kontur des Blocks eindringen, so daß die Gesamtbauhöhe von Pumpengehäuse und Elektromotorgehäuse möglichst gering bleibt.

Vorzugsweise wird der Übergangsbereich zwischen der Bodenfläche der Vertiefung und der Flanschfläche des Pumpengehäuses durch eine schräg verlaufende Ringfläche ausgebildet.

Die Bodenfläche der Vertiefung wird dabei so ausgebildet, daß die Verlängerung der Achsen der Anschlüsse, die in einer Ebene des Pumpenblocks unterhalb der Flanschfläche liegen, in möglichst geringem Abstand tangential an dem Kreis vorbeilaufen, der die Grundfläche der Vertiefung umschreibt.

Der beschriebene Elektromotor sowie die beschriebene Pumpe sind geeignet zu einem Motorpumpenaggregat zusammengebaut zu werden, wobei die Durchmesser der Bodenfläche der Vertiefung im Pumpengehäuse sowie der Grundscheibe des Schildes in etwa gleich sind. Dies bedeutet, daß die Form der Vertiefung im wesentlichen der Außenkontur des Schildes angepaßt ist.

Die Ausdehnung der Vertiefung in der Flanschseite des Pumpengehäuses wird so bemessen, daß der Rand des Motorgehäuses außerhalb der Vertiefung an der Flanschfläche zur Anlage kommt.

Eine weitere Möglichkeit die Bauhöhe insbesondere des Pumpengehäuses zu minimieren besteht darin, den Bereich der Welle, der als Exzenter ausgebildet ist, zumindest teilweise innerhalb des Innenrings eines Hauptlagers im Pumpengehäuse anzuordnen. Dies hat zur Folge, daß der Außenring eines Wälzlagers, der auf den Exzenter angeordnet ist, mit einer nach innen gezogenen Kante am Innenring des Hauptlagers zur Anlage kommt. Eine gesonderte Anlaufscheibe, wie sie zum Beispiel im Gebrauchsmuster DE 89 05 216.1 vorgesehen ist, ist nicht notwendig.

Im folgenden wird die Erfindung anhand eines Ausführungsbeispiels näher dargestellt.

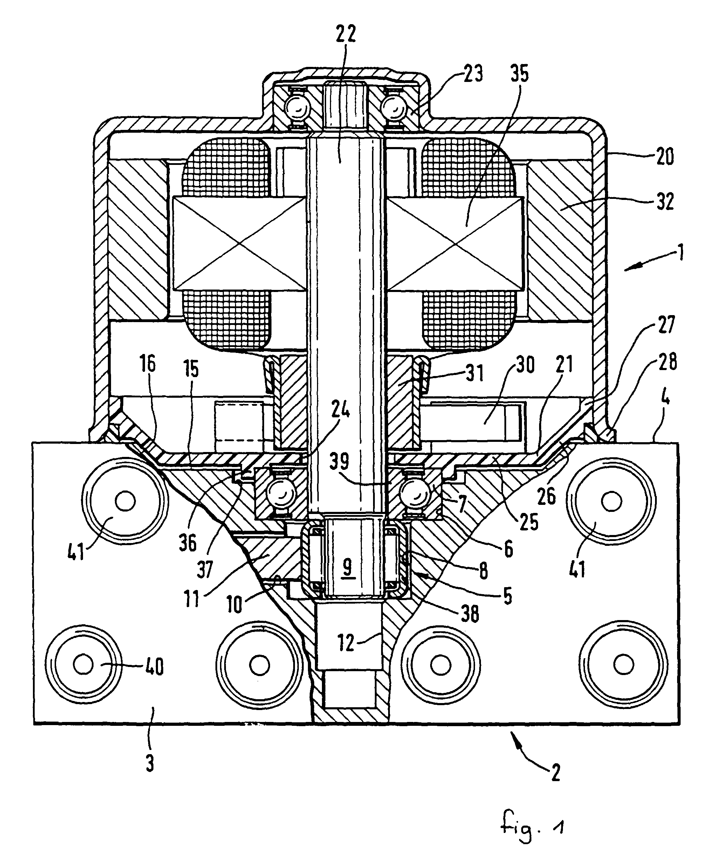

In der Figur wird im Schnitt ein Motorpumpenaggregat gezeigt, wobei sowohl die besonderen Merkmale des Elektromotors aus auch die besonderen Merkmale der Pumpe dargestellt sind.

Das Aggregat besteht aus einem Elektromotor 1 sowie einer Pumpe 2. Die Pumpe 2 ist in einem Block 3 angeordnet, der in der Figur teilweise geschnitten und teilweise in Draufsicht gezeigt ist. Im Zentrum des Blocks befindet sich eine Sackbohrung oder Aufnahmebohrung, die sich zu einer Breitseite des Blocks 3 hin öffnet, wobei an diese Breitseite der Elektromotor angeflanscht wird. Diese Seite soll im folgenden als Flanschseite 4 bezeichnet werden.

Die Sackbohrung 5 besteht aus einer ersten Stufe 6, in der formschlüssig das Hauptlager 7 eingesetzt ist.

Die zweite Stufe 8 befindet sich in Höhe einer Ebene im Block 3, in der Bohrungen 10 für die Pumpenkolben 11 der Pumpe 2 verlaufen. Auf der Höhe der zweiten Stufe 8 befindet sich auch ein Exzenter 9, an den die Pumpenkolben 11 anliegen. In der Figur ist nur ein Pumpenkolben 11 dargestellt. In der Regel werden gegenüberliegende Kolben eingesetzt. Eine noch tiefer liegende dritte Stufe 12 der Sacklochbohrung 5 nimmt ein weiteres Lager auf, das hier nicht näher dargestellt ist. An der Schmalseite des Blocks 3 erkennt man hydraulische Anschlüsse, wobei die Anschlüsse 40 in einer Ebene unterhalb der Ebene, in der die Pumpenkolben liegen, mit der Druckseite der Pumpe verbunden sind, während die Anschlüsse 41 oberhalb der Pumpenkolben-Ebene, zur Saugseite der Pumpe führen.

Die Flanschseite 4 des Blocks 3 ist nicht eben ausgeführt, sondern weist eine zentrisch zur Aufnahmebohrung ausgebildete flache Vertiefung 15 auf. Der Rand 16 dieser Vertiefung ist rampenartig schräg nach außen geführt und besitzt somit die Form der Mantelfläche eines Segments eines Kegelzylinders.

Der Elektromotor 1 besteht im wesentlichen aus einem topfförmigen Gehäuse 20, das zu einer Seite hin offen ist. Diese offene Seite wird durch ein Schild 21 verschlossen. In der Achse des topfförmigen Gehäuses 20 ist eine Motorwelle 22 angeordnet, die einerseits in einem Motorlager 23 im Topfboden und andererseits durch das Hauptlager 7 im Pumpengehäuse 3 gelagert wird. Dazu ist die Motorwelle 22 durch einen Durchbruch 24 im Schild 21 hindurchgeführt.

Der Schild 21 hat die folgende Kontur. Er besteht aus einer Grundscheibe 25, wobei der Durchmesser dieser Grundscheibe in etwa dem Durchmesser des Bodens der Vertiefung 15 im Pumpengehäuse 3 entspricht.

Der Randbereich ist schräg nach oben geführt und zwar entlang der Rampe 16 der Vertiefung. Im Außenbereich der Grundscheibe 25 ist ein Kragen 27 vorgesehen, auf den das topfförmige Gehäuse 20 des Motors aufgeschoben werden kann. Der Rand 28 des topfförmigen Gehäuses 20 kommt auf den nicht vertieften Bereich der Flanschfläche 4 zu liegen.

Auf dem Schild 21 befinden sich im Bereich der Grundscheibe 25 Bürsten 30, die einen Kollektor 31 kontaktieren.

Man erkennt, daß die Bürsten 30 bzw. der Kollektors 31 von einer gedachten flächigen Verlängerung der Flanschseite 4 geschnitten werden.

Die Bauhöhe des Elektromotors wird im wesentlichen bestimmt durch die Höhe des Kollektors 31 sowie die Länge des Rotors 35 und der zugehörigen Permanentmagnete 32, die an der Innenseite des Motorgehäuses 20 befestigt sind.

Die Bauhöhe des Blocks 3 wird bestimmt durch den Durchmesser der Bohrungen 10, den Anordnungen der Anschlüsse 40 und 41, sowie der zu fordernden Dicke des Materials zwischen den Bohrungen und den Anschlüssen, damit der Block seine Steifigkeit behält. Der Raum für die Vertiefung 15 wird gewonnen, indem die Anschlüsse 41 oberhalb der Pumpenkolben-Ebene im Außenbereich des Blocks angeordnet sind, so daß die schon beschriebene Vertiefung 15 ausgeführt werden kann, wobei diese in den Bereich zwischen den Anschlüssen 41 hineinragt.

Da der Elektromotor mit einem Schild versehen ist, der im zentralen Bereich gegenüber dem Außenrand des Gehäuses 20 hervorsteht und in eine entsprechende Vertiefung 15 im Pumpengehäuse 3 eingeführt ist, ergibt sich eine geringere effektive Höhe des Elektromotors. Insgesamt wird somit die Bauhöhe des Pumpengehäuses 3 und Elektromotors 1 verringert.

Der Schild 21 weist an seiner Außenfläche einen konzentrisch zur Achse umlaufenden Steg 36 auf, dessen Innendurchmesser dem Außendurchmesser des Hauptlagers entspricht. Der Steg 36 ragt in einen Ringraum 37 hinein. Das Hauptlager 7, das in der ersten Stufe 6 angeordnet ist, ragt in den Ringraum 37 hinein, so daß der Außenring des Hauptlagers 7 vom Steg 36 umfaßt wird. Auf diese Weise wird der Schild 31 und damit das Elektromotorgehäuse 20 am Hauptlager 7 fixiert. Da das Hauptlager 7 in radialer Richtung im Pumpenblock 3 fixiert ist, ergibt sich eine zentrische Ausrichtung des Elektromotorgehäuses 20. Gleichzeitig wird bewirkt, daß der Steg 36 das Hauptlager 7 hält, so daß es zunächst am Schild 21 fixiert werden kann, wodurch ohne daß der Elektromotor mit dem Block 3 verbunden ist, ein funktionsfähiger Motor vorliegt, der unabhängig von der Pumpe 2 getestet werden kann. Das Hauptlager 7 wird mit der Montage des Elektromotors 1 am Block 3 in die erste Stufe 6 hineingesetzt.

Die Ausrichtung des Elektromotorgehäuses 20 zum Motorblock 3 kann auch dadurch erfolgen, daß der Außendurchmesser des Stegs 36 dem Außendurchmesser des Ringraums 37 entspricht.

Wie in der Figur zu erkennen ist, beginnt der Bereich der Welle 22, der als Exzenter 9 ausgebildet ist, innerhalb des Hauptlagers 7. Dadurch wird erreicht, daß der Außenring 38 eine Wälzlagers am Exzenter 9 am Innenring 39 des Hauptlagers 7 zur Anlage kommt. Dies hat den Vorteil, daß eine gesonderte Anlaufscheibe nicht mehr notwendig ist. Auch dies trägt dazu bei, daß die Baulänge des Motorpumpenaggregats verkürzt wird.

### Bezugszeichenliste

- 1: Elektromotor
- 2: Pumpe
- 3: Block
- 4: Flanschseite
- 5: Sackbohrung
- 6: erste Stufe
- 7: Hauptlager
- 8: zweite Stufe
- 9: Exzenter
- 10: Bohrungen
- 11: Pumpenkolben
- 12: dritte Stufe
- 15: Vertiefung
- 16: Rand

- 20: Gehäuse
- 21: Schild
- 22: Motorwelle
- 23: Motorlager
- 24: Durchbruch
- 25: Grundscheibe
- 27: Krage
- 28: Rand

- 30: Bürsten
- 31: Kollektor
- 32: Permanentmagnete
- 35: Rotor
- 36: Steg
- 37: Ringraum
- 38: Außenring
- 39: Innenring
- 40: Anschlüsse
- 41: Anschlüsse

## Patentansprüche

1. Elektromotor für eine Pumpe mit einem topfförmigen Gehäuse (20), einer Welle (22), die zentrisch im Gehäuse angeordnet ist, einem Schild (21), der das offene Ende des Gehäuses (20) verschließt und einen Durchlaß (24) aufweist, durch den die Welle (22) aus dem Gehäuse herausgeführt ist, sowie einem am Außenrand des Schildes umlaufenden Kragen (27) auf den das Gehäuse (20) aufgeschoben ist, dadurch **gekennzeichnet,** daß der Schild (21) aus einer flachen Grundscheibe (25) besteht, in deren Zentrum sich der Durchlaß (24) für die Welle befindet, sowie aus einem Randbereich (26), der sich schräg nach außen aus der Grundscheibe (25) heraus erhebt und an dessen Außenrand der umlaufende Kragen (27) ausgebildet ist, wobei, wenn der Schild (21) mit dem Gehäuse (20) verbunden ist, die Grundscheibe (25) in Achsrichtung betrachtet vor dem Rand (28) des topfförmigen Gehäuses (20) liegt.

2. Elektromotor nach Anspruch 1, dadurch **gekennzeichnet,** daß an der Innenseite des Schildes (21) Bürsten (30) angeordnet sind, die einen Kollektor (31) an der Welle (22) kontaktieren, wobei der Durchmesser der Grundscheibe (25) größer ist, als der Bereich den die Bürsten (30) in radialer Richtung ausfüllen.

3. Elektromotor nach Anspruch 1, dadurch **gekennzeichnet,** daß am Schild (21) eine Halterung (36) für ein Hauptlager (7) vorgesehen ist.

4. Elektromotor nach Anspruch 3, dadurch **gekennzeichnet,** daß die Halterung aus einem umlaufenden Steg (36) gebildet wird, der von der Außenfläche der Grundscheibe (25) herausragt, und dessen Innendurchmesser dem Außendurchmesser des Hauptlagers entspricht.

5. Pumpengehäuse, an den ein Elektromotor insbesondere ein Elektromotor nach einem der vorhergehenden Ansprüche angeflanscht werden kann, bestehend aus einem im wesentlichen quaderförmigen Block (3), der eine in einer Flanschfläche (15) einmündende Sackbohrung (5) aufweist, in der die Welle eines Elektromotors einsteckbar ist, wobei in einer mittleren Ebene senkrecht zur Aufnahmebohrung (5) sich Bohrungen (10) für Pumpenkolben (11) befinden, und in Ebenen ober- und unterhalb der mittleren Ebene Gehäusekanäle verlaufen, die zu in diesen Ebenen angeordneten Ventilen, Anschlüssen (40,41) und/oder Speichern führen, dadurch **gekennzeichnet,** daß an der Flanschseite (4) eine flache Vertiefung ausgebildet ist, deren Durchmesser kleiner ist als der Durchmesser des Gehäuses des anzuflanschenden Elektromotors.

6. Pumpengehäuse nach Anspruch 5, dadurch **gekennzeichnet,** daß der Übergangsbereich zwischen der Bodenfläche (15) der Vertiefung und der Flanschfläche (4) des Pumpengehäuses (3) durch eine schräg verlaufende Ringfläche (16) ausgebildet ist.

7. Elektromotor/Pumpenaggregat mit einem Elektromotor nach einem der Ansprüche 1 bis 4 sowie mit einer Pumpe nach einem der Ansprüche 5 und 6, dadurch **gekennzeichnet,** daß der Durchmesser der Bodenfläche (15) dem Durchmesser der Grundscheibe (21) des Elektromotors entspricht.

8. Elektromotor/Pumpenaggregat nach Anspruch 7, dadurch **gekennzeichnet,** daß der Rand (28) des Motorgehäuses (20) an der Flanschfläche (4) des Pumpengehäuses (3) anliegt.

9. Elektromotor/Pumpenaggregat nach Anspruch 7 oder 8, dadurch **gekennzeichnet,** daß die Bürsten (30) an der Innenseite des Schildes (21) von einer gedachten Verlängerung der Flanschfläche (4) geschnitten werden.

10. Elektromotor/Pumpenaggregat nach Anspruch 7, dadurch **gekennzeichnet,** daß der Bereich der Welle (22), der als Exzenter (9) ausgebildet ist, zum Teil innerhalb des Hauptlagers (7) liegt.

## Claims

1. Electric motor for a pump with a pot-shaped housing (20), a centrally located shaft (22) in the housing with a plate (21) that seals off the open end of the housing (20) and has a passage (24), through which the shaft (22) extends from the housing, and a collar (27), surrounding the outer edge of the plate, onto which the housing (20) is pushed,
**characterized** in that the plate (21) consists of a flat base plate (25) in whose center there is a passage (24) for the shaft, and of an edge region (26) that protrudes at a slant outward from the base plate (25) and at whose outer edge the perimeter collar (27) is formed, wherein, when the plate (21) is connected with the housing (20), the base plate (25) is located in front of the edge (28) of the pot-shaped housing (20) viewed in the axial direction.

2. Electric motor as claimed in claim 1,
**characterized** in that at the inner side of the plate (21), brushes (30) are provided which contact a collector (31) at the shaft (22), with the diameter of the base plate (25) being larger than the region filled by the brushes (30) in a radial direction.

3. Electric motor as claimed in claim 1,
**characterized** in that a mount (36) is provided on the plate (21) for a main bearing (7).

4. Electric motor as claimed in claim 3,
**characterized** in that the mount is formed from a perimeter span (36) that protrudes from the outer surface of the base plate (25), and whose inner diameter corresponds to the outer diameter of the main bearing.

5. Pump housing to which an electric motor can be attached with a flange, in particular an electric motor according to one of the preceding claims, consisting of an essentially rectangular block (3) that features a blind hole (5) opening into a flanged surface (15) into which the shaft of an electric motor can be inserted, wherein in a middle plane perpendicular to the receiving hole (5), other holes (10) for pump pistons (11) are provided, and housing channels run in planes above and below the middle plane, the channels leading to valves, connections (40, 41) and/or reservoirs situated in these planes,
**characterized** in that a flat recess is formed at the flanged side (4) and the diameter of this recess is smaller than the diameter of the housing of the electric motor to be attached with a flange.

6. Pump housing as claimed in claim 5,
**characterized** in that the transition region between the base surface (15) of the recess and the flanged surface (4) of the pump housing (3) is formed by a slanting ring surface (16).

7. Electric motor/pump unit with an electric motor as claimed in any one of claims 1 to 4, and with a pump as claimed in any one of the claims 5 and 6,
**characterized** in that the diameter of the base surface (15) corresponds to the diameter of the base plate (21) of the electric motor.

8. Electric motor/pump unit as claimed in claim 7,
**characterized** in that the edge (28) of the motor housing (20) rests against the flanged surface (4) of the pump housing (3).

9. Electric motor/pump unit as claimed in claim 7 or claim 8,
**characterized** in that the brushes (30) are cut at the inside of the plate (21) by an imaginary extension of the flanged surface (4).

10. Electric motor/pump unit as claimed in claim 7,
**characterized** in that the region of the shaft (22) formed as an eccentric (9) is located in part within the main bearing (7).

## Revendications

1. Moteur électrique destiné à une pompe, comprenant un boîtier (20) en forme de cuvette, un arbre (22), qui est disposé en position centrale dans le boîtier, un flasque (21), qui obture l'extrémité ouverte du boîtier (20) et comporte une ouverture de passage (24) par laquelle l'arbre (22) sort du boîtier, et un collet (27) circonférentiel disposé suivant le bord extérieur du flasque et sur lequel le boîtier (20) est emboîté, caractérisé en ce que le flasque (21) est formé d'un disque de base (25) plat, au centre duquel l'ouverture de passage (24) prévue pour l'arbre est située, et d'une zone périphérique (26) qui s'élève d'une manière inclinée vers l'extérieur à partir du disque de base (25) et sur le bord extérieur de laquelle le collet circonférentiel (27) est formé, de sorte que, lorsque le flasque (21) est rendu solidaire du boîtier (20), le disque de base (25) est situé, considéré suivant la direction de l'axe, en avant du bord (28) du boîtier (20) en forme de cuvette.

2. Moteur électrique suivant la revendication 1, caractérisé en ce que des balais (30) sont disposées sur la face intérieure du flasque (21), les balais (30) étant au contact d'un collecteur (31) situé sur l'arbre (22), le diamètre du disque de base (25) étant plus grand que la zone que les balais (30) occupent en direction radiale.

3. Moteur électrique suivant la revendication 1, caractérisé en ce que, sur le flasque (21), il est prévu un élément de maintien (36) pour un palier principal (7).

4. Moteur électrique suivant la revendication 3, caractérisé en ce que l'élément de maintien est formé d'une nervure circonférentielle (36) qui fait saillie sur la surface extérieure du disque de base (25) et dont le diamètre intérieur est égal au diamètre extérieur du palier principal.

5. Boîtier de pompe, sur lequel un moteur électrique, notamment un moteur électrique suivant l'une des revendications précédentes, peut être assemblé en applique, constitué d'un bloc (3) essentiellement parallélépipédique présentant un alésage borgne (5) qui débouche sur une surface d'assemblage en applique (15) et dans lequel l'arbre d'un moteur électrique est emboîtable, tandis que des alésages (10) prévus pour des pistons de pompe (11) sont ménagés dans un plan médian perpendiculairement à l'alésage de logement (5) et que des conduits de boîtier s'étendent dans des plans situés au-dessus et au-dessous du plan médian, ces conduits de boîtier menant à des valves, raccords (40, 41) et/ou accumulateurs disposés dans ces plans, caractérisé en ce que, sur la face d'assemblage en applique (4), il est ménagé une partie en retrait de faible profondeur dont le diamètre est inférieur au diamètre du boîtier du moteur électrique à assembler en applique.

6. Boîtier de pompe suivant la revendication 5, caractérisé en ce que la zone de transition entre la surface de fond (15) de la partie en retrait et la surface d'assemblage en applique (4) du boîtier de pompe (3) est formée d'une surface annulaire (16) inclinée.

7. Ensemble moteur électrique/pompe comprenant un moteur électrique suivant l'une des revendications 1 à 4 et une pompe suivant l'une des revendications 5 et 6, caractérisé en ce que le diamètre de la surface de fond (15) est égal au diamètre du disque de base (21) du moteur électrique.

8. Ensemble moteur électrique/pompe suivant la revendication 7, caractérisé en ce que le bord (28) du boîtier de moteur (20) est en appui sur la surface d'assemblage en applique (4) du boîtier de pompe (3).

9. Ensemble moteur électrique/pompe suivant la revendication 7 ou 8, caractérisé en ce que les balais (30) situés sur la face intérieure du flasque (21) sont recoupés par un prolongement imaginaire de la surface d'assemblage en applique (4).

10. Ensemble moteur électrique/pompe suivant la revendication 7, caractérisé en ce que la partie de l'arbre (22) qui est réalisée en forme d'excentrique (9) est située en partie à l'intérieur du palier principal (7).
